# EUROPÄISCHE PATENTSCHRIFT

(11) **EP 0 912 267 B1**
(45) Veröffentlichungstag und Bekanntmachung des Hinweises auf die Patenterteilung: **09.02.2000**
(21) Anmeldenummer: 96918632.9
(22) Anmeldetag: 29.05.1996
(51) Int. Cl.: B21D 31/04, B23K 26/08, B26F 1/26, B23K 15/00

(54) **ANORDNUNG UND VERFAHREN ZUR ERZEUGUNG VON STRECKMATERIAL**
ARRANGEMENT AND METHOD FOR PRODUCING EXPANDED MATERIAL
DISPOSITIF ET PROCEDE POUR LA PRODUCTION D'UN MATERIAU DEPLOYE

(30) Priorität: 03.05.1996 AT 80196; 24.05.1996 AT 92296
(43) Veröffentlichungstag der Anmeldung: 06.05.1999
(73) Patentinhaber: Inter-Caylian Anstalt, 9490 Vaduz (LI)
(72) Erfinder: Stelzl, Thomas, A-1060 Wien (AT)
(74) Vertreter: Weinzinger, Arnulf, Dipl.-Ing.
(86) Internationale Anmeldenummer: EP9602267
(87) Internationale Veröffentlichungsnummer: WO9741980

(56) Entgegenhaltungen:
- EP-A- 0 340 619
- US-A- 4 328 411
- US-A- 5 083 487
- PATENT ABSTRACTS OF JAPAN vol. 8, no. 253 (M-339), 20.November 1984 & JP,A,59 127987 (MITSUBISHI DENKI KK), 23.Juli 1984,
- PATENT ABSTRACTS OF JAPAN vol. 12, no. 466 (M-772), 7.Dezember 1988 & JP,A,63 192561 (NKK CORP), 9.August 1988,

## Beschreibung

Die Erfindung betrifft eine Anordnung zur Erzeugung von Streckmaterial, insbesondere aus folienartigen Metallbahnen, mit einer Schneideinrichtung zur Erzeugung zusammenhängender Streifen aus Folienbahnen, und mit einer Streckeinrichtung zum Strecken der Bahn, sowie ein Verfahren zur Erzeugung von Streckmaterial gemäß dem Oberbegriff des Anspruchs 6.

Ein solches Streckmaterial sind metallische und/oder nichtmetallische mono- und/oder multifile Verbundwaben aus flächigem Trägerwerkstoff. Die Verbundwaben können z.B. aus beschichtetem Papier, Gummi, Aluminium, Edelstahl, Edelmetall, Keramik oder Kunststoffen mit jedem geforderten Modul, Dehnung und Härte gefertigt werden (z.B. Kohlefaser/Aramid Waben für hochfeste Trägerstrukturen).

Die bevorzugte Material- und/oder Verbundstärke der dafür benötigten Folien aus metallischen und/oder nichtmetallischen flächigen Waren, sowie die mögliche Kombination dieser flächigen Gebilde (Verbundwerkstoffe), liegt zwischen 25 und 90µ.

Das Streckmaterial kann als Klimasperre, Wärmetauscher, Abstandhalter, Flammensperre, Filter, Isolator, Explosionsschutz, Oberflächenvergrößerung, Katalysator u.ä. Verwendung finden.

Insbesondere zur Verringerung der Explosionsgefahr bei Treibstofftanks und/oder Gastanks (Flüssiggas) ist es bereits bekanntgeworden, ein derartiges Streckmaterial aus einer bestimmten Aluminiumlegierung zu verwenden, wobei es derart zur Anwendung gelangt, daß es als Coil (Netzwerkballen) oder in Form von gestauchten Rundkörpern aus diesem Netzwerk, in Tanks eingebracht wird, dort eine wesentliche Oberlächenvergrößerung bewirkt, jedoch nur einige Prozent des Tankvolumens einnimmt.

Ebenfalls ist bekanntgeworden, daß die bisherige Praxis nur diese bestimmte Aluminiumlegierungen zu verwenden (andere Materialien waren aufgrund des noch zu zitierenden Herstellverfahren nicht zu verarbeiten), bei den Anwendern eines derarigen Explosionsschutzes auf Kritik gestoßen ist, da sich der Werkstoff Aluminium in der Praxis für wesentliche Anwendungsgebiete, aufgrund jeweils damit verbundener chemischer, bzw. metallurgischer Nachteile, als nicht brauchbar herausgestellt hat.

Es ist daher eine wesentliche Forderung der potentiellen Anwender, daß das Material des Streckmateriales in Abhängigkeit vom Verwendungszweck, d.h. beispielsweise beim Einsatz als Explosionsschutz in Treibstoff- und/oder Gastanks, den zu transportierenden oder zu speichernden Substanzen, ausgewählt werden kann und mit einem höchstmöglichen Sauberkeitsstandard verarbeitet wird, da es sich teilweise anwenderseits um Reinräume, in denen derartige Streckmaterialien eingebracht werden, handelt.

Bisherige Anordnungen haben diesen Anforderungen nicht Rechnung getragen.

Eine derartige Anordnung, sowie ein Verfahren zu Erzeugung von Streckmaterial sind z.B. aus der EP-B 340 619 bekannt, die dem Oberbegriff der Ansprüche 1 und 6 entspricht. Hier besteht die Schneideinheit aus zusammenwirkenden Messerwalzen, die sowohl in in Quer- als auch in Längsrichtung vorgegebenen Abständen Schlitze in die Folienbahn schneiden. Die Messer der Messerwalzen sind selbstschärfend und unterliegen einer starken Abnützung, die ein häufiges Auswechseln und damit einen Produktionsstop der Anlage bedingen. Das Material und vorallem die Härte der Messer schränken die Materialwahl für die zu bearbeitenden Folienbahnen ein. Durch die Abmessungen der Schneideinrichtung des Standes der Technik ist das Material, die Dicke und die Breite der Folie, sowie die Anordnung der Schlitze vorgegeben. Eine Anpassung an verschiedene Forderungen der Praxis je nach Anwendungsgebiet ist nicht möglich.

Ferner kommt es beim Schneiden mit den Messerwalzen zum Abfall von Spänen und winzigen Abriebteilchen, die in vielen der obigen Anwendungen unerwünscht sind. Z.B. gelangen sie in den in einem explosionsgeschützten Tank befindlichen Treibstoff und verschmutzen die Filteranlage oder wenn die feinen Partikeln durch die Filteranlage nicht zurückgehalten werden, gelangen sie z.B. in die Kolben eines Verbrennungsmotors und verursachen dort eine übermäßige Abnutzung und letztendlich Zerstörung des Verbrennungsraumes. Das Schneiden mit Messerwalzen erfordert auch das Vorhanden sein von Schmiermitteln, die nach dem Schneiden entfernt werden müssen, was bei vertretbarem Aufwand nur unvollständig gelingt und zur Korrosion der Oberfläche des Streckmaterials führen kann.

Es ist daher Aufgabe der vorliegenden Erfindung eine Anordnung der eingangs genannten Art zu schaffen und ein Verfahren zu finden, bei der bzw. bei dem die angeführten Nachteile nicht mehr auftreten. Die Verarbeitung verschiedenster Materialien mit beliebigen Abmessungen soll in mehreren Varianten möglich sein.

Erfindungsgemäß wird vorgeschlagen, daß bei einer Anordnung der eingangs genannten Art die Schneideinrichtung Laser-, Wasser- oder Elektronenstrahlen abgebende Vorrichtungen enthält, die im wesentlichen nebeneinander quer zur Laufrichtung der Bahn angeordnet sind und durch eine Steuereinrichtung kontrolliert werden.

Das erfindungsgemäße Verfahren ist im Anspruch 6 definiert.

Beim Laserschneiden fallen beispielsweise keine Späne und Partikeln an, Schmiermittel sind nicht erforderlich. Je nach den Eigenschaften des zu bearbeitenden Materials, wie z.B. Härte und Dicke, und nach den gewünschten Eigenschaften des bearbeiteten Endprodukts werden über die Steuereinrichtung die Schneidestrahlen eingestellt. Natürlich kann über die Steuereinrichtung die Länge der Schnitte eingestellt werden.

Vorzugsweise sind die die Laser-, Wasser- oder Elektronenstrahlen abgebenden Vorrichtungen einzeln positionierbar, bzw. die Laser-, Wasser- oder Elektronenstrahlen unabhängig voneinander ausrichtbar, sodaß die Schnitte beliebig auf den Bahnen erzeugt werden können.

Nach einer bevorzugten Ausführungsform der Erfindung sind die die Laser-, Wasser- oder Elektronenstrahlen abgebenden Vorrichtungen einzeln schaltbar, wodurch die Breite der Streifen variabel ist. Ist z.B. jede zweite Strahlenvorrichtung nicht in Betrieb, verdoppelt sich die Streifenbreite.

Bei bevorzugt anzuwendenden Laservorrichtungen besteht insbesondere auch die Möglichkeit, ein notwendiges Strahlengitter zum Schneiden nicht durch eine Viehlzahl einzelner Laser zu erzeugen, sondern dieses Gitter durch steuerbare Ablenkungsoptiken (Glasfaser etc.), die von einem einzigen Laserimpuls gespeist werden, energiesparender zu realisieren. Die Laserstrahlen abgebenden Vorrichtungen sind also mit steuerbaren Ablenkungsoptiken, insbesondere Glasfasern verbunden, die von einer einzigen Laserimpulse erzeugenden Einrichtung gespeist werden.

Schließlich sind vorzugsweise die die Laser-, Wasser-, Elektronenstrahlen abgebenden Vorrichtungen hinsichtlich der abgegebenen Energie unabhängig voneinander einstellbar. Die erforderliche Energie hängt von der Härte und der Dicke des zu bearbeitenden Materials, sowie von der gewünschten Schlitzbreite ab.

Die solcherarts mit quer und/oder längs zur Laufrichtung verlaufenden Schlitzen, versehenen vorbehandelten Folienbahnen, werden danach durch räumliches Aufziehen (Streckeneinrichtung), zu wickelförmigen Streckmetallkörpern ausgebildet.

Da bei einem derartigen Aufziehen der vorbehandelten (quer zur Längsrichtung geschnitten) Folienbahn nicht nur eine Verbreiterung, sondern gleichzeitig in Laufrichtung auch eine Verkürzung der Folienbahn eintritt, ist es wesentlich, daß bei einer kontinuierlich arbeitenden Produktionsvorrichtung, mit einer nacheinander angeordneten und durch die jeweils gleiche Folienbahn verbundene Schneide- und Streckeinheit, und nur eine solche ist als zielführend wirtschaftlich anzusehen, während des eigentlichen Streckvorganges es zu einer Erniedrigung der Durchlaufgeschwindigkeit der Folienbahn im Verhältnis der beim Strecken erfolgenden Längenverkürzung der Folienbahn kommt.

Das Strecken selbst, erfolgt im wesentlichen dadurch, daß die geschnittene Folienbahn an seinen Rändern gehalten und weiter transportiert wird, während es in der Mitte auf einen gegenüber der Ebene der geschnittenen Folienbahn unter einem spitzen Winkel nach oben gerichteten Auflaufkörper verläuft, wobei statt dem Auflaufkörper auch ein umlaufendes Band gewählt werden kann, das sinnhafterweise einen runden Querschnitt aufzuweisen hat, und das aus einem Material mit hohem Reibwert gegenüber dem Material der Folienbahn zu bestehen hat.

Als randseitige Halterung für die Folienbahn können verschiedenste Arten von Reinolds-Förderketten, oder Zahnriemenstrecken aus Kunststoff-, Gewebezahnriemen, deren Oberfläche aus elastischem Material (Kautschuk, Gummi, etc.) besteht, zur Anwendung gelangen. Durch Auswechseln des Auflaufkörpers und entsprechender Geschwindigkeitssteuerung der Maschine ist eine Veränderung der diversen Streckfaktoren der Folienbahn möglich.

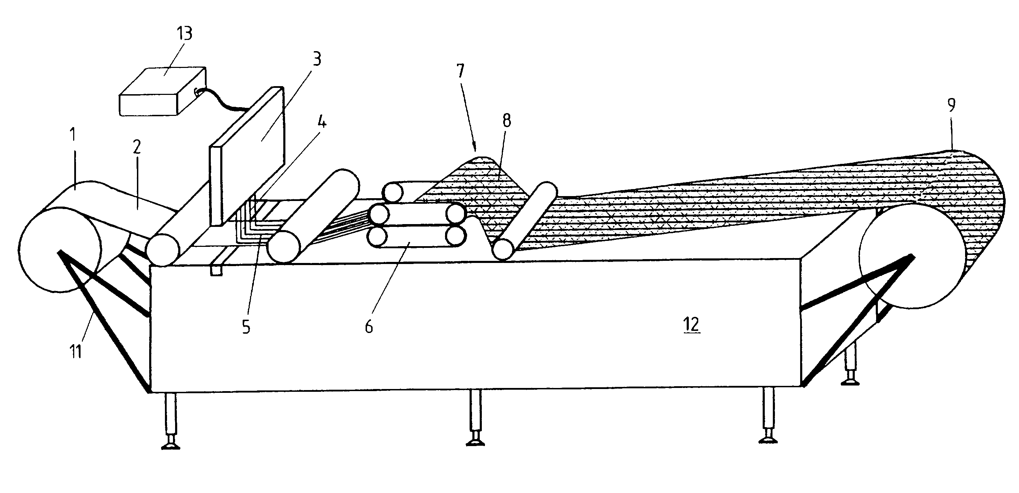

In der beiliegenden Zeichnung ist eine mögliche Ausführungsform der erfindungsgemäßen Anordnung dargestellt. Von einem Foliencoil 1 der von einer Halterung 11 getragen wird, wird die unbehandelte Folie 2 abgezogen und einem Bearbeitungstisch 12 zugeführt. Über dem Bearbeitungstisch 12 ist quer zur Laufrichtung der Folienbahn 2 eine Schneidevorrichtung 3 angeordnet, die Vorrichtungen zur Abgabe von Laser-, Wasser- oder Elektronenstrahlen 4 enthält. Die Schneideeinrichtung 3 bzw. die darin enthaltenen Strahlen 4 abgebenden Vorrichtungen werden durch eine Steuereinrichtung 13 kontrolliert. Über diese Steuereinrichtung 13 ist die Position der einzelnen Strahlen 4 abgebenden Vorrichtungen, die Ausrichtung der Strahlen 4, die Aktivierung der einzelnen Vorrichtungen, die Intensität der Strahlen 4 und die Schnittlänge der Strahlen 4 einstellbar. Die durch die Strahlen 4 geschnittene Folie 5 wird infolge einer Streckeinrichtung, bestehend aus randseitigen Halterungen 6, die gleichzeitig für den Vortrieb der geschnittenen Folienbahn 5 bzw. der gestreckten Folienbahn 8 sorgt, und einem Auflaufkörper 7 der sich in der Darstellung unterhalb der dargestellten gestreckten Folienbahn 8 befindet und die Strekkung der geschnitten Folienbahn 5 zur gestreckten Folienbahn 8 bewirkt. Die dermaßen geschnittene und gestreckte Folienbahn 8 wird auf einer Aufrollraspel 9 wiederum zu einem Coil gewickelt.

## Patentansprüche

1. Anordnung zur Erzeugung von Streckmaterial (8), insbesondere aus folienartigen Metallbahnen (2), mit einer Schneideinrichtung (3) zur Erzeugung zusammenhängender Streifen aus Folienbahnen (5), und mit einer Streckeinrichtung (6,7) zum Strecken der Bahn, dadurch gekennzeichnet, daß die Schneideinrichtung (3) Laser-, Wasser- oder Elektronenstrahlen (4) abgebende Vorrichtungen enthält, die im wesentlichen nebeneinander quer zur Laufrichtung der Bahn (2) angeordnet sind und durch eine Steuereinrichtung (13) kontrolliert werden.

2. Anordnung nach Anspruch 1, dadurch gekennzeichnet, daß die die Laser-, Wasser- oder Elektronenstrahlen abgebenden Vorrichtungen einzeln positionierbar sind bzw. die Laser-, Wasser-, oder Elektronenstrahlen (4) unabhängig voneinander ausgerichtet werden können.

3. Anordnung nach einem der Ansprüche 1 oder 2, dadurch gekennzeichnet, daß die die Laser-, Wasser- oder Elektronenstrahlen abgebenden Vorrichtungen einzeln schaltbar sind.

4. Anordnung nach einem der vorhergehenden Ansprüchen, dadurch gekennzeichnet, daß die Laserstrahlen (4) abgebenden Vorrichtungen mit steuerbaren Ablenkungsoptiken, insbesondere Glasfasern, verbunden sind, die von einer einzigen Laserimpulse erzeugenden Einrichtung gespeist werden.

5. Anordnung nach einem der Ansprüche 1 bis 4, dadurch gekennzeichnet, daß die die Laser-, Wasser- oder Elektronenstrahlen (4) abgebenden Vorrichtungen hinsichtlich der abgegebenen Energie unabhängig voneinander einstellbar sind.

6. Verfahren zur Erzeugung von Streckmaterial (8), insbesondere aus folienartigen Metallbahnen (2), bei dem mit einer Schneideinrichtung (3) zusammenhängende Streifen aus Folienbahnen (5) erzeugt werden, und darauffolgend die geschnittene Folienbahn (5) mit einer Streckeinrichtung (6,7) einer ein- oder zweiachsigen Streckung unterworfen wird, dadurch gekennzeichnet, daß das Schneiden mit Laser-, Wasser- oder Elektronenstrahlen erfolgt, deren Quellen im wesentlichen nebeneinander quer zur Laufrichtung der Bahn angeordnet und durch eine Steuereinrichtung (13) kontrolliert werden.

## Claims

1. An arrangement for producing expanded material (8) in particular from foil-type webs (2) of metal, with a cutting device (3) for producing coherent strips of webs of foil (5) and an expanding device (6, 7) for expanding the web, characterized in that the cutting device (3) comprises laser beam, water jet or electron beam (4)-emitting devices which are arranged substantially adjacent each other, transversely to the moving direction of the web (2), and which are controlled by a controlling device (13).

2. An arrangement according to claim 1, characterized in that the laser beam, water jet or electron beam-emitting devices are individually positionable, or the laser beams, water jets or electron beams (4) are orientable independently of each other.

3. An arrangement according to any one of claims 1 or 2, characterized in that the devices emitting the laser beams, water jets or electron beams are individually actuatable.

4. An arrangement according to any one of the preceding claims, characterized in that the laser beam (4)-emitting devices are connected with controllable deflecting optic devices, in particular glass fibers, which are fed by a single laser-pulse-generating device.

5. An arrangement according to any one of claims 1 to 4, characterized in that the laser beam, water jet or electron beam (4)-emitting devices are adjustable independently of each other in terms of the energy emitted.

6. A method of producing expanded material (8), in particular of foil-type webs (2) of metal, in which coherent strips are produced from webs of foil (5) by means of a cutting device (3), and subsequently the cut webs of foil (5) are subjected to a mono- or double-axial expansion by means of an expanding device (6, 7), characterized in that cutting is effected by means of laser beams, water jets or electron beams the sources of which are substantially adjacently arranged transversely to the moving direction of the web and are controlled by a controlling device (13).

## Revendications

1. Appareil pour la production de matériaux déployés (8), en particulier à partir de bandes de métal analogue à des feuilles (2), comprenant un dispositif de découpe (3) pour produire des rubans qui se tiennent mutuellement à partir de bandes de feuilles (5), et comprenant un dispositif de déploiement (6, 7) pour déployer la bande, caractérisé en ce que le dispositif de découpe (3) contient des dispositifs fournissant des faisceaux lasers, des faisceaux d'électrons, ou des jets d'eau (4), qui sont agencés essentiellement les uns à côté des autres perpendiculairement à la direction de déplacement de la bande (2) et qui sont commandés par un dispositif de commande (13).

2. Appareil selon la revendication 1, caractérisé en ce que les dispositifs qui fournissent les faisceaux lasers, les faisceaux d'électrons, ou les jets d'eau, sont susceptibles d'être positionnés individuellement, ou en ce que les faisceaux lasers, les faisceaux d'électrons, ou les jets d'eau (4) sont susceptibles d'être orientés indépendamment les uns des autres.

3. Appareil selon l'une ou l'autre des revendications 1 et 2, caractérisé en ce que les dispositifs qui fournissent les faisceaux lasers, les faisceaux d'électrons, ou les jets d'eau, sont susceptibles d'être commutés individuellement.

4. Appareil selon l'une des revendications précédentes, caractérisé en ce que les dispositifs fournissant des faisceaux laser (4) sont reliés à des systèmes optiques de déflexion commandés, en particulier des fibres de verre, qui sont alimentés par un dispositif unique fournissant des impulsions laser.

5. Appareil selon l'une des revendications 1 à 4, caractérisé en ce que les dispositifs fournissant des faisceaux lasers, des faisceaux d'électrons, ou des jets d'eau (4) sont susceptibles d'être réglés indépendamment les uns des autres pour ce qui concerne l'énergie fournie.

6. Procédé pour produire des matériaux déployés (8), en particulier à partir de bandes de métal analogue à des feuilles (2), dans lequel on produit dans des bandes de feuilles (5) des rubans qui se tiennent mutuellement au moyen d'un dispositif de coupe (3), et l'on soumet ensuite la bande de feuille découpée (5) à un déploiement suivant un ou deux axes au moyen d'un dispositif de déploiement (6, 7), caractérisé en ce que la découpe a lieu au moyen de faisceaux lasers, de faisceaux d'électrons, ou de jets d'eau, dont les sources sont agencées essentiellement les unes à côté des autres perpendiculairement à la direction de déplacement de la bande, et sont commandées par un dispositif de commande (13).
